# EUROPÄISCHE PATENTSCHRIFT

(11) **EP 1 347 685 B1**
(45) Veröffentlichungstag und Bekanntmachung des Hinweises auf die Patenterteilung: **29.04.2009**
(21) Anmeldenummer: 01985867.9
(22) Anmeldetag: 12.12.2001
(51) Int. Cl.: A01N 63/00, A01N 47/22

(54) **VERFAHREN ZUR KONTROLLE VON SCHADORGANISMEN IN KULTUREN VON BT-MAIS**
METHOD FOR CONTROLLING HARMFUL ORGANISMS IN THE CULTIVATION OF USEFUL PLANTS
PROCEDE DE CONTROLE D'ORGANISMES NUISIBLES DANS DES CULTURES DE PLANTES UTILES

(30) Priorität: 28.12.2000 DE 10065395
(43) Veröffentlichungstag der Anmeldung: 01.10.2003
(73) Patentinhaber: Bayer CropScience AG, 40789 Monheim (DE)
(72) Erfinder: KERN, Manfred, 55296 Lörzweiler (DE)
(86) Internationale Anmeldenummer: PCT/EP2001/014564
(87) Internationale Veröffentlichungsnummer: WO 2002/052943

(56) Entgegenhaltungen:
- WO-A-02/30205
- WO-A-97/45017
- WO-A-99/35910
- WO-A-99/63829
- US-A- 6 057 370
- JOHNSON D R ET AL: "Control of Bollworm on Cotton Using BT combinations, 1991" STN CROPU, XP002117936
- BURRIS G ET AL: "Evaluations of square damage on bollgard (Bt) cotton, 1995" STN CROPU, XP002102506
- FIFE J H ET AL: "Efficacy of selected insecticides against cotton aphids on BT cotton, 1996" STN CROPU, XP002102505
- HUSSEIN ET AL: "Joint action of certain insecticides, Bacillus thuringiensis and their mixtures on the pink bollworm infestation in cotton plantation in Egypt" STN CABA, XP002117813
- BURRIS E ET AL: "A threshold management test with NuCOTN 33B, 1996" STN CROPU, XP002117928

## Beschreibung

Genetisch veränderte Maispflanzen, die Toxine aus Bacillus thuringiensis (Bt) exprimieren und dadurch eine Resistenz gegen Befall durch bestimmte Schadinsekten aufweisen (Bt-Mais), sind bekannt und werden in steigendem Maße im kommerziellen Pflanzenbau eingesetzt (siehe z.B. EP-A 0 485 506). Obwohl solch gentechnisch veränderter Mais bereits sehr gute Eigenschaften aufweist, besteht doch noch eine Reihe von Problemen, so daß ein breiter Raum für Verbesserungen bleibt.

In WO 02/30205 wird der Schutz von transgenen Bt-Maispflanzen gegen Fraßschäden durch Behandeln des Saatguts mit einer wirksamen Menge an bestimmten Pestiziden beschrieben. Die Bekämpfung von Schadorganismen an transgenen Pflanzen, wie unter anderen Bt-Mais, durch Aufbringen von Pymetrozine, Profenofos, einem Benzoylharnstoff-Derivat oder einem Carbamat-Derivat auf die Schadorganismen oder deren Umgebung ist in WO 99/35910 beschrieben. WO 99/63829 offenbart, dass bestimmte insektizide Wirkstoffe in Kombination mit Bt-Baumwolle synergistische Effekte aufweisen.

Aufgabe war es daher verbesserte Problemlösungen zur Bekämpfung von Maisschädlingen bereitzustellen.

Es wurde nun überraschend gefunden, daß bestimmte Insektizide bei Verwendung in Kombination mit Bt-Mais synergistische Effekte aufweisen.

Gegenstand der Erfindung ist daher ein Verfahren zur Bekämpfung von Schadorganismen in gentechnisch veränderten Maispflanzen, die ein aus Bacillus thuringiensis abgeleitetes Gen enthalten, welches für ein insektizid wirksames Protein kodiert und dieses exprimiert, wobei man eine insektizid synergistisch wirksame Menge an Methiocarb (482) auf die Pflanzen, deren Saat- oder Vermehrungsgut und/oder deren Anbaufläche aufbringt.

Die eingeklammerte Zahl gibt die Eintragungsnummer in 'The e-Pesticide Manual', CD-ROM-Version 1.1, 1999-2000 (ISBN: 1-901396-22-3), basierend auf The Pesticide Manual, 11. Auflage, British Crop Protection Council, Farnham, 1997, wieder.

Das erfindungsgemäße Verfahren ermöglicht eine reduzierte Aufwandmenge an Pflanzenschutzmitteln, die synergistisch mit den transgenen Pflanzen wirken, sowie eine Erhöhung und Verbreiterung des Wirkungsgrades der transgenen Pflanzen und bietet somit ökonomische wie ökologische Vorteile.

Die Vorteile des erfindungsgemäßen Verfahrens liegen einerseits in Synergismen mit den in der transgenen Pflanze produzierten Bacillus thuringiensis Toxinen (Bt-Toxinen) sowie andererseits in einer z.B. verminderten Anzahl von Applikationen oder einer Reduzierung der Aufwandmengen auf zum Teil subletale Dosierungen (im Vergleich zur konventionellen Anwendung der einzelnen Insektizide) und einer damit verbundenen deutlich reduzierten Umweltbelastung.

Ebenso Gegenstand der Erfindung ist die Verwendung von Methiocarb zur Bekämpfung von Schadorganismen im Synergismus mit gentechnisch veränderten Maispflanzen, die ein aus Bacillus thuringiensis abgeleitetes Gen enthalten, welches für ein insektizid wirksames Protein kodiert und dieses exprimiert.

Der Begriff "insektizid wirksam" umfaßt im Sinne der Erfindung insektizide, akarizide, molluskizide, nematizide, ovizide Wirkung, sowie eine abschreckende (repellent), verhaltensändernde (behavior modifier) und sterilisierende (sterilant) Wirkung.

Die erfindungsgemäß eingesetzte insektizid wirksame Verbindung ist bekannt und kommerziell erhältlich.

Das erfindungsgemäß verwendete Insektizid ist üblicherweise als kommerzielle Formulierung erhältlich. Sie kann aber gegebenenfalls auf verschiedene Art formuliert werden, je nachdem wie es durch die biologischen und/oder chemisch-physikalischen Parameter vorgegeben ist. Als Formulierungsmöglichkeiten kommen beispielsweise in Frage:
Spritzpulver (WP), emulgierbare Konzentrate (EC), wäßrige Lösungen (SL), Emulsionen, versprühbare Lösungen, Dispersionen auf ÖI- oder Wasserbasis (SC), Suspoemulsionen (SE), Stäubemittel (DP), Beizmittel, Granulate in Form von Mikro-, Sprüh-, Aufzugs- und Adsorptionsgranulaten, wasserdispergierbare Granulate (WG), ULV-Formulierungen, Mikrokapseln, Wachse oder Köder.

Diese einzelnen Formulierungstypen sind im Prinzip bekannt und beispielsweise beschrieben in:
Winnacker-Küchler, "Chemische Technologie", Band 7, C. Hauser Verlag München, 4. Aufl. 1986; van Falkenberg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel, wie Inertmaterialien, Tenside, Lösungsmittel und weitere Zusatzstoffe, sind ebenfalls bekannt und werden beispielsweise beschrieben in:
Watkins, "Handbook of Insecticide Dust Diluents and Garriers", 2nd Ed., Darland Books, Caldwell N.J.; H. v. Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1967; Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, Düngemitteln und/oder Pflanzenwachstumsregulatoren herstellen, z.B. in Form einer Fertigformulierung oder als Tankmix. Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Cadodecylbenzol-sulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die. Herstellung von Düngemittelgranulaten üblichen Weise - gewünschtenfalls in Mischung mit Düngemitteln - granuliert werden.

In Spritzpulvern beträgt die Wirkstoffkonzentration z.B. etwa 10 bis 90 Gew.% der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gen.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Mit den äußeren Bedingungen wie Temperatur, Feuchtigkeit u.a. variiert die erforderliche Aufwandmenge. Sie kann innerhalb weiter Grenzen schwanken, z. B. zwischen 0,1 g/ha und 5,0 kg/ha oder mehr Aktivsubstanz. Vorzugsweise liegt sie jedoch zwischen 0,1 g/ha und 1,0 kg/ha. Auf Grund der synergistischen Effekte zwischen Bt-Mais und Insektizid sind Aufwandmengen von 0,5 bis 500 g/ha, besonders bevorzugt.

Für Methiocarb sind Aufwandmengen von 50 bis 5000 g/ha bevorzugt, besonders bevorzugt sind 50 bis 2000 g/ha.

Der Wirkstoff kann in seinen handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

Bevorzugte weitere Mischungspartner sind
1. aus der Gruppe der Carbonsäureester
   Acrinathrin, Allethrin, Alphametrin, 5-Benzyl-3-furylmethyl-(E)-, (1 R)-cis-2,2-di-methyl-3-(2-oxothiolan-3-ylidenemethyl)cyclopropanecarboxylate, Beta-Cyfluthrin, Bioallethrin, Bioallethrin((S)-cyclopentylisomer), Bioresmethrin, Bifenthrin, (RS)-1-Cyano-1-(6-phenoxy-2-pyridyl)methyl-(1RS)-trans-3-(4-tert.butylphenyl)-2,2-dimethylcyclopropanecarboxylate (NCl 85193), Cycloprothrin, Cythithrin, Cyphenothrin, Empenthrin, Esfenvalerate, Fenfluthrin, Flumethrin, Fluvalinate (D-Isomer), Imiprothrin (S-41311), Permethrin, Phenothrin ((R)-Isomer), Prallethrin, Pyrethrine (natürliche Produkte), Resmethrin, Tetramethrin, Theta-Cypermethrin (TD-2344), Transfluthrin, Zeta-Cypermethrin (F-56701);
2. aus der Gruppe der Amidine
   Chlordimeform;
3. Sonstige:
   ABG-9008, Acetamiprid, Anagrapha falcitera, AKD-1022, AKD-3059, ANS-118, Bifenazate (D-2341), Binapacryl, BJL-932, Bromopropylate, BTG-504, BTG-505, Buprofezin, Camphechlor, Chlorobenzilate, Chlorfluazuron, 2-(4-Chlorphenyl)-4,5-diphenylthiophen (UBI-T 930), Chlorfentezine, Chromafenozide (ANS-118), CG-216, CG-217, CG-234, A-184699, Cyclopropancarbonsäure-(2-naphthylmethyl)ester (Ro12-0470), Cyromazin, Diacloden (Thiamethoxam), N-(3,5-Dichlor-4-(1,1,2,3,3,3-hexafluor-1-propyloxy)phenyl)carbamoyl)-2-chlorbenzcarboximidsäureethylester, DDT, Dicofol, N-(2,3-Dihydro-3-methyl-1,3-thiazol-2-ylidene)-2,4-xylidine, Dinobuton, Dinocap, Diofenolan, DPX-062, Emamectin-Benzoate (MK-244), Ethiprole (Sulfethiprole), Ethofenprox, Etoxazole (YI-5301), Fenoxycarb, Fluazuron, Flumite (Flufenzine, SZI-121), 2-Fluoro-5-(4-(4-ethoxyphenyl)-4-methyl-1-pentyl)diphenylether (MTI 800), Fenpyroximate, Fenthiocarb, Flubenzimine, Flucycloxuron, Flufenprox (ICI-A5683), Fluproxyfen, Gamma-HCH, Halofenozide (RH-0345), Halofenprox (MTI-732), Hexaflumuron (DE_473), Hexythiazox, HOI-9004, Hydramethylnon (AC 217300), Indoxacarb (DPX-MP062), Kanemite (AKD-2023), M-020, MTI-446, Ivermectin, M-020, Milbemectin, NC-196, Neemgard, Nitenpyram (TI-304), 2-Nitromethyl-4,5-dihydro-6H-thiazin (DS 52618), 2-Nitromethyl-3,4-dihydrothiazol (SD 35651), 2-Nitromethylene-1,2-thiazinan-3-ylcarbamaldehyde (WL 108477), Pyriproxyfen (S-71639), NC-196, NC-1111, NNI-9768, OK-9701, OK-9601, OK-9602, Propargite, Pymethrozine, Pyridaben, Pyrimidinen (SU-8801), RH-0345, RH-2485, RYI-210, S-1283, S-1833, SB7242, SI-8601, Silafluofen, Silomadine (CG-177), SU-9118, Tebufenpyrad (MK-239), Teflubenzuron, Tetradifon, Tetrasul, TI-435, Tolfenpyrad (OMI-88), Triflumuron, Verbutin, Vertalec (Mykotal), YI-5301.

Der Wirkstoffgehalt der aus den handelsüblichen Formulierungen bereiteten Anwendungsformen kann von 0,00000001 bis zu 95 Gew.-%, vorzugsweise zwischen 0,00001 und 1 Gew.-%, Wirkstoff liegen.

Das erfindungsgemäße Verfahren eignet sich bevorzugt zur Anwendung gegen alle Entwicklungsstadien der Schadorganismen (Ei, alle Larvenstadien, wie beispielsweise L1, L2, L3, L4, bis Adult), insbesondere bei der Bekämpfung von Homopteren, Dipteren, Lepidopteren und Coleopteren.

Unter dem Begriff'Bt-Mais' sind im Sinne der Erfindung Maispflanzen bzw. -kulturen zu verstehen, die genetisch dahingehend modifiziert sind, daß sie ein oder mehrere Gene aus Bacillus thuringiensis, welche für ein insektizid wirksames Protein kodieren enthalten und exprimieren.

Bevorzugt sind Bacillus thuringiensis - Kristallproteine aus der Cry-Familie (siehe z.B. N. Crickmore et al., Microbiol. Mol. Biol. Rev. 1998, 62, 807-812), die wirksam sind gegen Lepidopteren, Coleopteren und Dipteren.

Besonders bevorzugt sind Gene kodierend für die Proteine cry1Aa1, cry1Aa2, cry1Aa3, cry1Aa4, cry1Aa5, cry1Aa6, cry1Aa7, cry1Aa8, cry1Aa9, cry1Aa10, cry1Aa11 cry1Ab1, cry1Ab2, cry1Ab3, cry1Ab4, cry1Ab5, cry1Ab6, cry1Ab7, cry1Ab8, cry1Ab9, cry1Ab10, cry1Ab11, cry1Ab12, cry1Ab13, cry1Ab14, cry1Ac1, cry1Ac2, cry1Ac3, cry1Ac4, cry1Ac5, cry1Ac6, cry1Ac7, cry1Ac8, cry1Ac9, cry1Ac10, cry1Ac11, cry1Ac12, cry1Ac13, cry1Ad1, cry1Ad2, cry1Ae1, cry1Af1, cry1Ag1, cry1Ba1, cry1Ba2, cry1Bb1, cry1 Bc1, cry1 Bd1, cry1 Be1, cry1Ca1, cry1Ca2, crylCa3, cry1 Ca4, cry1Ca5, crylCa6, cry1 Ca7, cry1Cb1, cry1Cb2, cry1Da1, cry1Da2, cry1Db1, cry1Ea1, cry1 Ea2, cry1Ea3, cry1 Ea4, cry1Ea5, cry1Ea6, cry1Eb1, cry1Fa1, cry1Fa2, cry1Fb1, cry1 Fb2, cry1Fb3, cry1Fb4, cry1Ga1, cry1Ga2, cry1Gb1, cry1Gb2, cry1Ha1, cry1Hb1, cry1Ia1, cry1Ia2, cry1Ia3, cry1Ia4, cry1Ia5, cry1Ia6, cry1Ib1, cry1Ic1, cry1Id1, cry1Ie1, cry1L-like, cry1 Ja1, cry1Jb1, cry1Jc1, cry1Ka1, cry1-like, cry2Aa1, cry2Aa2, cry2Aa3, cry2Aa4, cry2Aa5, cry2Aa6, cry2Aa7, cry2Aa8, cry2Aa9, cry2Ab1, cry2Ab2, cry2Ab3, cry2Ac1, cry2Ac2, cry2Ad1, cry3Aa1, cry3Aa2, cry3Aa3, cry3Aa4, cry3Aa5, cry3Aa6, cry3Aa7, cry3Ba1, cry3Ba2, cry3Bb1, cry3Bb2, cry3Bb3, cry3Ca1, cry4Aa1, cry4Aa2, cry4Ba1, cry4Ba2, cry4Ba3, cry4Ba4, cry5Aa1, cry5Ab1, cry5Ac1, cry5Ba1, cry6Aa1, cry6Ba1, cry7Aa1, cry7Ab1, cry7Ab2, cry8Aa1, cry8Ba1, cry8Ca1, cry9Aa1, cry9Aa2, cry9Ba1, cry9Ca1, cry9Da1, cry9Da2, cry9Ea1, cry9 like, cry10Aa1, cry10Aa2, cry11Aa1, cry11Aa2, cry11Ba1, cry11Bb1, cry12Aa1, cry13Aa1, cry14Aa1, cry15Aa1, cry16Aa1, cry17Aa1, cry18Aa1, cry18Ba1, cry18Ca1, cry19Aa1, cry19Ba1, cry20Aa1, cry21Aa1, cry21Aa2, cry22Aa1, cry23Aa1, cry24Aa1, cry25Aa1, cry26Aa1, cry27Aa1, cry28Aa1, cry28Aa2, cry29Aa1, cry30Aa1, cry31Aa1, cyt1Aa1, cyt1Aa2, cyt1Aa3, cyt1Aa4, cyt1Ab1, cyt1Ba1, cyt2Aa1, cyt2Ba1, cyt2Ba2, cyt2Ba3, cyt2Ba4, cyt2Ba5, cyt2Ba6, cyt2Ba7, cyt2Ba8, cyt2Bb1.

Besonders bevorzugt sind die Subfamilien cry1, cry2, cry3, cry5 und cry9.

Ganz besonders bevorzugt sind die Subfamilien cry1Ab, cry1Ac und cry9C.

Weiterhin bevorzugt ist es Pflanzen einzusetzen, die Gene für mehrere Bt-Proteine enthalten.

Die transgenen Kulturpflanzen können neben der Expression von Toxinen aus Bacillus thuringiensis (Bt) zur Insektenresistenz auch eine weitere transgene Eigenschaft aufweisen, z.B. weitere Insektenresistenzen (z.B. durch Expression eines Protease- bzw. Peptidase-Inhibitors, vgl. WO-A-95/35031), Herbizidresistenzen (z.B. gegen Glufosinate oder Glyphosate durch Expression des pat- oder bar-Gens) oder auch Nematoden-, Pilz- oder Virusresistenzen (z.B. durch Expression einer Glucanase, Chitinase) oder auch in ihren metabolischen Eigenschaften genetisch modifiziert sein, so daß eine qualitative und/oder quantitative Änderung von Inhaltsstoffen (z.B. durch Modifikationen des Energie-, Kohlenhydrat-, Fettsäure- oder Stickstoffwechsels oder diese beeinflussende Metabolitflüsse) resultiert. Bevorzugt sind beispielsweise Bt-Maispflanzen, die zusätzlich eine Glufosinate- oder Glyphosate-Resistenz aufweisen.

Bt-Mais ist bekannt und, einschließlich Methoden zu seiner Herstellung, ausführlich beschrieben in beispielsweise lshida, Y., Saito, H., Ohta, S., Hiei, Y., Komari, T., and Kumashiro, T. (1996). High efficiency transformation of maize (Zea mayz L.) mediated by Agrobacterium tumefaciens. Nature Biotechnology 4: 745-750.

Bt-Mais ist weiterhin in verschiedenen Variationen kommerziell erhältlich, beispielsweise unter folgenden Namen (Firma/Firmen jeweils in Klammern): KnockOut^{®} (Novartis Seeds), NaturGard^{®} (Mycogen Seeds), Yieldgard^{®} (Novartis Seeds, Monsanto, Cargill, Golden Harvest, Pioneer, DeKalb u.a.), Bt-Xtra^{®} (DeKalb) und StarLink^{®} (Aventis CropScience, Garst u.a.).

Bevorzugt für das erfindungsgemäße Verfahren sind folgende Typen von Bt-Mais: KnockOut^{®}, NaturGard^{®}, Yieldgard^{®}, Bt-Xtra^{®} und StarLink^{®}.

Wege zur Herstellung transgener Pflanzen, die im Vergleich zu natürlich vorkommenden Pflanzen modifizierte Eigenschaften aufweisen, bestehen beispielsweise in der Anwendung gentechnischer Verfahren (siehe z.B. Willmitzer L., 1993, Transgenic plants. In: Biotechnology, A Multivolume Comprehensive Treatise, Rehm et al. (eds.) Vol.2, 627-659, VCH Weinheim, Germany; D' Halluin et al., 1992, McCormick et al. Plant Cell Reports,1986, 5, 81-84, EP-A-0221044, EP-A-0131624).

Zahlreiche molekularbiologische Techniken, mit denen neue transgene Pflanzen mit veränderten Eigenschaften hergestellt werden können, sind dem Fachmann bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können geeignete Nucleinsäuremoleküle z.B. mittels geeigneter Vektoren, die eine Mutagenese oder eine Sequenzveränderung durch Rekombination von DNA-Sequenzen erlauben, in Pflanzen bzw. pflanzliche Zellen eingebracht werden. Mit Hilfe der obengenannten Standardverfahren können auch z. B. Basenaustausche vorgenommen, Teilsequenzen entfernt oder natürliche oder synthetische Sequenzen hinzugefügt werden. Es können auch z.B. die natürlich vorkommenden Gene vollständig durch heterologe bzw. synthetische Gene vorzugsweise unter der Kontrolle eines in Pflanzenzellen aktiven Promoters ersetzt werden ('gene replacement'). Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment oder zu einem bestimmten Zeitpunkt (zu einem bestimmten Stadium oder chemisch oder biologisch induziert) gewährleisten (z.B. Transit- oder Signalpeptide, zeit- oder ortsspezifische Promotoren). Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden.

Auf diese Weise sind transgene Pflanzen erhältlich, die veränderte Eigenschaften durch Überexpression, Suppression oder Inhibierung homologer (d.h. endogener) Gene oder Gensequenzen oder Expression heterologer (d.h. exogener) Gene oder Gensequenzen aufweisen.

Das erfindungsgemäße Verfahren eignet sich zur Bekämpfung einer Vielzahl von Schadorganismen, die insbesondere in Mais auftreten, insbesondere Insekten, Spinnentieren und Helminthen, ganz besonders bevorzugt Insekten und Spinnentieren. Zu den erwähnten Schädlingen gehören:
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Eotetranychus spp., Oligonychus spp., Eutetranychus spp..
Aus der Ordnung der Isopoda z.B. Oniscus asselus, Armadium vulgar, Porcellio scaber. Aus der Ordnung der Diplopoda z.B. Blaniulus guttulatus.
Aus der Ordnung der Chilopoda z.B. Geophilus carpophagus, Scutigera spp..
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea madeirae, Blatella germanica, Acheta domesticus, Gryllotalpa spp., Locusta migratoria migratorioides, Melanoplus differentialis, Schistocerca gregaria.
Aus der Ordnung des Isoptera z.B. Reticulitermes spp..
Aus der Ordnung der Anoplura z.B. Phylloera vastatrix, Pemphigus spp., Pediculus humanus corporis, Haematopinus spp., Linognathus spp..
Aus der Ordnung der Mallophaga z.B. Trichodectes pp., Damalinea spp..
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp..
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelus bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Helicoverpa spp.,Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana, Ostrinia nubilalis, Bombyx obsoleta.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylloides chrysocephala, Epilachna varivestis, Atomaria spp., Oryzaephilus surinamensis, Anthonumus spp., Sitophilus spp., Otiorrhynchus sulcatus, Cosmopolites sordidus, Ceuthorrynchus assimilis, Hypera postica, Dermestes spp., Trogoderma, Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp..
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopsis, Ceratophyllus spp..
Aus der Ordnung der Arachnida z.B. Scorpio maurus, Latrodectus mactans.
Aus der Klasse der Helminthen z.B. Haemonchus, Trichostrongulus, Ostertagia, Cooperia, Chabertia, Strongyloides, Oesophagostomum, Hyostrongulus, Ancylostoma, Ascaris und Heterakis sowie Fasciola.

Bevorzugt eignet sich das erfindungsgemäße Verfahren zur Bekämpfung von Heliothis spp., Helicoverpa spp., Prodenia litura, Spodoptera spp., Chilo spp., Ostrinia nubilalis, Bombyx obsoleta und Diabrotica spp..

Die Erfindung wird durch das folgende Beispiel näher erläutert, ohne sie dadurch einzuschränken.

### Beispiel

Ein synergistischer Effekt wird dadurch belegt, daß 2 Wochen alte Bt-Maispflanzen von Hand besprüht werden jeweils mit dem gewünschten Wirkstoff in Dosierungen, die unterhalb der empfohlenen Dosierungen liegen. Das Spritzvolumen entspricht hierbei 400 I/ha. Nach dem Abtrocknen werden die Pflanzen mit Eiern des Maiszuenslers *Ostrinia nubilalis,* der die Maisstengel befällt, infiziert (Alter der Eier: 2 bis 3 Tage). Die Pflanzen werden im Gewächshaus bei 23°C kultiviert. Die Auswertung auf Befallsschäden erfolgt vier Wochen nach der Spritzanwendung.

## Patentansprüche

1. Verfahren zur Bekämpfung von Schadorganismen in gentechnisch veränderten Maispflanzen, die ein aus Bacillus thuringiensis abgeleitetes Gen enthalten, welches für ein insektizid wirksames Protein kodiert und dieses exprimiert, **dadurch gekennzeichnet, dass** man eine insektizid synergistisch wirksame Menge an Methiocarb auf die Pflanzen, deren Saat- oder Vermehrungsgut und/oder deren Anbaufläche aufbringt.

2. Verfahren nach Anspruch 1, **dadurch gekennzeichnet, dass** das insektizid wirksame Protein in der Maispflanze ein Kristallprotein aus der Subfamilie cry1, cry2, cry3, cry5 und/oder cry9 ist.

3. Verfahren nach Anspruch 1 oder 2, **dadurch gekennzeichnet, dass** man Maispflanzen verwendet, die eine Glufosinate- oder Glyphosat-Resistenz aufweisen.

4. Verfahren nach einem oder mehreren der Ansprüche 1 bis 3, **dadurch gekennzeichnet, dass** man neben Methiocarb eine oder mehrere weitere insektizid, fungizid oder herbizid wirksame Verbindung einsetzt.

5. Verfahren nach Anspruch 2, **dadurch gekennzeichnet, dass** das insektizid wirksame Protein in der Maispflanze cry1Ab, cry1Ac und/oder cry9C ist.

6. Verwendung von Methiocarb zur Bekämpfung von Schadorganismen im Synergismus mit gentechnisch veränderten Maispflanzen, die ein aus Bacillus thuringiensis abgeleitetes Gen enthalten, welches ein insektizid wirksames Protein kodiert und dieses exprimiert.

## Claims

1. Method for controlling harmful organisms in genetically modified maize plants containing a gene derived from Bacillus thuringiensis, said gene encoding and expressing a protein with an insecticidal action, **characterized in that** an insecticidally synergistically active quantity of methiocarb is applied to the plants, their seeds or propagation material and/or the area in which they are cultivated.

2. Method according to claim 1, **characterized in that** the insecticidally active protein in the maize plant is a crystal protein from the subfamily cry1, cry2, cry3, cry5 and/or cry9.

3. Method according to claim 1 or 2, **characterized in that** maize plants which have a glufosinate or glyphosate resistance are used.

4. Method according to one or more of Caims 1 to 3, **characterized in that** it employs, in addition to methiocarb, one or more further insecticidally, fungicidally or herbicidally active compound.

5. Method according to claim 2, **characterized in that** the insecticidally active protein in the maize plant is cry1 Ab, cry1 Ac and/or cry9C.

6. Use of methiocarb for controlling harmful organisms in synergism with genetically modified maize plants containing a gene derived from Bacillus thuringiensis encoding and expressing a protein with an insecticidal action.

## Revendications

1. Procédé pour lutter contre les organismes nuisibles dans des plants de maïs génétiquement modifiés, qui contiennent un gène dérivé de *Bacillus thuringiensis,* lequel code une protéine active comme insecticide et exprime celle-ci, **caractérisé en ce que** l'on applique une quantité active de manière insecticide et synergique de méthiocarbe sur les plants, leurs graines ou leur matériel de multiplication et/ou leur site de développement.

2. Procédé selon la revendication 1, **caractérisé en ce que** la protéine active de manière insecticide dans le plant de maïs est une protéine cristalline de la sous-famille cry1, cry2, cry3, cry5 et/ou cry9.

3. Procédé selon la revendication 1 ou 2,
**caractérisé en ce que** l'on utilise des plants de maïs, qui présentent une résistance au glufosinate ou au glyphosate.

4. Procédé selon l'une ou plusieurs des revendications 1 à 3, **caractérisé en ce que** l'on met en oeuvre, en plus du méthiocarbe, un ou plusieurs autres composés actifs de manière insecticide, fongicide ou herbicide.

5. Procédé selon la revendication 2, **caractérisé en ce que** la protéine active de manière insecticide dans les plants de maïs est cry1Ab, cry1Ac et/ou cry9C.

6. Utilisation du méthiocarbe pour lutter contre les organismes nuisibles en synergie avec des plants de maïs génétiquement modifiés, qui contiennent un gène dérivé de *Bacillus thuringiensis,* lequel code une protéine active comme insecticide et exprime celle-ci.
